# EUROPÄISCHE PATENTSCHRIFT

(11) **EP 3 771 367 B1**
(45) Veröffentlichungstag und Bekanntmachung des Hinweises auf die Patenterteilung: **14.12.2022**
(21) Anmeldenummer: 20183484.3
(22) Anmeldetag: 01.07.2020
(51) Int. Cl.: A47J 27/00, A47J 27/06, A47J 43/07, A47J 27/04

(54) **DAMPFGARAUFSATZ, GEFÄSS-DAMPFGARAUFSATZ-KOMBINATION UND KÜCHENMASCHINE**
STEAM COOKER ATTACHMENT, VESSEL-STEAM COOKER ATTACHMENT COMBINATION AND KITCHEN APPLIANCE
INSERT DE CUISEUR À VAPEUR, COMBINAISON DE RÉCIPIENT ET D'INSERT DE CUISEUR À VAPEUR ET ROBOT DE CUISINE

(30) Priorität: 30.07.2019 DE 102019211295
(43) Veröffentlichungstag der Anmeldung: 03.02.2021
(73) Patentinhaber: BSH Hausgeräte GmbH, 81739 München (DE)
(72) Erfinder: Slakan, Gregor, 1420 Trbovlse (SI); Enci, David, 3331 Nazarje (SI); Habe, Mitja, 3320 Velenje (SI); Bäcker, Anna, 83301 Traunreut (DE); Ziegler, Felicitas, 83371 Stein a.d. Traun (DE); Blischke, Daniela, 84529 Tittmoning (DE)

(56) Entgegenhaltungen:
- EP-A1- 3 087 879
- WO-A2-2014/013378
- DE-U1-202014 003 418

## Beschreibung

Die vorliegende Erfindung betrifft einen Dampfgaraufsatz, der auf ein Gefäß, insbesondere ein Gefäß einer Küchenmaschine aufzusetzen ist. Darüber hinaus betrifft die Erfindung eine Gefäß-Dampfgaraufsatz-Kombination mit einem Gefäß und einem derartigen Dampfgaraufsatz sowie eine Küchenmaschine, die eine Basisstation und eine Gefäß-Dampfgaraufsatz-Kombination umfasst.

Bekannte Dampfgaraufsätze umfassen einen Behälter mit einem Dampfeinlass, der über dampfendem, insbesondere siedendem Wasser positioniert werden kann. Im Behälter angeordnetes Lebensmittel kann dann in dem aufsteigenden Dampf gegart werden. Dies ermöglicht eine besonders nährstoffschonende Zubereitung. Der Behälter kann in der Regel mit einer Abdeckung abgedeckt werden. Zwischen Behälter und Abdeckung kann zudem eine Zwischenschale anzuordnen sein, deren Inhalt dann gleichzeitig mit einem Behälterinhalt, aber physisch getrennt von diesem gegart werden kann.

Insbesondere umfassen verschiedene moderne Küchenmaschinen einen Dampfgaraufsatz, der dann auf ein Gefäß der Küchenmaschine aufgesetzt werden kann. Aus der EP 3 087 879 A1 ist ein Zubehörteil zum Dampfgaren bekannt, das einen auf einer Schale zu positionierenden Korb, eine auf dem Korb anzuordnende Garplatte und einen Deckel zum Aufsetzen auf die Garplatte oder direkt auf den Korb aufweist.

Der vorliegenden Erfindung liegt die Aufgabe zugrunde, eine Technik bereitzustellen, mit der die Anwendung eines Dampfgarverfahrens vereinfacht und sicherer wird.

Die Aufgabe wird gelöst durch einen Dampfgaraufsatz gemäß Anspruch 1, eine Gefäß-Dampfgaraufsatz-Kombination nach Anspruch 9 und eine Küchenmaschine gemäß Anspruch 10. Vorteilhafte Ausführungsformen sind in den Unteransprüchen, der Beschreibung und den Figuren offenbart.

Ein erfindungsgemäßer Dampfgaraufsatz umfasst eine Dampfgarschüssel, eine Zwischenschale und eine Abdeckung, die dazu eingerichtet/ geeignet sind, in dieser Reihenfolge gestapelt auf ein Gefäß aufgesetzt und zum Dampfgaren verwendet zu werden. Insbesondere kann die Zwischenschale auf die Dampfgarschüssel aufgesetzt werden, wobei vorzugsweise mindestens ein Bereich der Zwischenschale in der Dampfgarschüssel versenkt wird.

Das Aufsetzen des Dampfgaraufsatzes kann dabei direkt auf das Gefäß möglich bzw. vorgesehen sein oder indirekt, also mit einem dazwischen angeordneten weiteren Element, beispielsweise einer ggf. zum Gefäß gehörigen Abdeckung. Die Dampfgarschüssel und die Zwischenschale weisen vorzugsweise jeweils mindestens einen Dampfeinlass auf, durch den bei ihrer Verwendung im Gefäß erzeugter Dampf in die Dampfgarschüssel bzw. (direkt oder durch die Dampfgarschüssel hindurch) in die Zwischenschale eintreten kann. Insbesondere können die Dampfgarschüssel und/oder die Zwischenschale jeweils einen löchrigen Boden und/oder eine im Vergleich zu ihrer jeweiligen Grundfläche erhabene Dampfzufuhreinrichtung aufweisen. Gemäß bevorzugten Ausführungsvarianten weist die Zwischenschale (alternativ oder zusätzlich zu mindestens einem Dampfeinlass an ihrem und/oder durch ihren Boden) eine Schalenwand mit einem oder mehreren Löchern auf. In einem auf die Dampfgarschüssel aufgesetzten Zustand ist die Schalenwand der Zwischenschale dabei vorzugsweise mindestens bereichsweise von einer Schüsselwand der Dampfgarschüssel beabstandet, so dass Dampf durch einen Zwischenraum zwischen der Schüsselwand und der Schalenwand in die Zwischenschale eindringen kann.

An der Zwischenschale eines erfindungsgemäßen Dampfgaraufsatzes ist mindestens ein Griffelement angeordnet. Daran angefasst kann die Zwischenschale vorteilhaft bewegt, insbesondere umpositioniert, beispielsweise von einer ersten Unterlage abgehoben und/oder zurück auf die erste oder auf eine zweite Unterlage aufgesetzt werden; die erste oder die zweite Unterlage kann dabei insbesondere die Dampfgarschüssel sein.

Darüber hinaus ist an der Zwischenschale mindestens ein Griffschild angeordnet, der dazu eingerichtet ist, das mindestens eine Griffelement in einer für ein Dampfgaren vorgesehenen Ausrichtung der Zwischenschale (die im Folgenden als ihre "vorgesehene Dampfgarausrichtung" bezeichnet wird) nach unten hin (also von unten) abzuschirmen.

Zur Unterscheidung von anderen (weiter unten genannten) Griffelementen bzw. Griffschilden werden die genannten Griffelemente nachfolgend als "Zwischenschalengriffe" und die genannten Griffschilde als "Zwischenschalengriffschilde" bezeichnet.

Eine erfindungsgemäße Gefäß-Dampfgaraufsatz-Kombination umfasst ein Gefäß und einen darauf aufzusetzenden (passenden) erfindungsgemäßen Dampfgaraufsatz gemäß einer der in dieser Schrift offenbarten Ausführungsformen. Das Gefäß kann eine dampfdurchlässige Abdeckung umfassen.

Das Gefäß kann beispielsweise ein Kochtopf zum Aufsetzen auf eine Wärmequelle (z.B. eine Herdplatte) sein und/oder selbst eine Heizeinrichtung umfassen, beispielsweise eine Heizwendel. Insbesondere kann das Gefäß als Wasserkocher ausgebildet sein. Gemäß vorteilhaften Ausführungsformen ist das Gefäß Teil einer eine Heizfunktion aufweisenden Küchenmaschine, die zudem eine Basisstation umfasst, mittels deren das Gefäß bzw. darin jeweils enthaltenes Lebensmittel (insbesondere Wasser) erhitzt werden kann. Beispielsweise kann das Gefäß eine Heizeinrichtung umfassen, die über die Basisstation an eine Stromquelle anzuschließen ist; dazu kann die Heizeinrichtung insbesondere mindestens eine Steckverbindung aufweisen.

Die Küchenmaschine kann bei derartigen Ausführungsformen beispielsweise eine erfindungsgemäße Küchenmaschine gemäß einer der in dieser Schrift offenbarten Varianten sein:
Eine erfindungsgemäße Küchenmaschine umfasst eine Basisstation und eine erfindungsgemäße Gefäß-Dampfgaraufsatz-Kombination gemäß einer der in dieser Schrift offenbarten Ausführungsformen. Das Gefäß kann dabei herausnehmbar in einer vorgesehenen Verwendungsposition der Basisstation angeordnet werden. Die Küchenmaschine hat eine Heizfunktion, ist also dazu eingerichtet/ geeignet, im Gefäß angeordnetes Lebensmittel (insbesondere Wasser) zu erhitzen, wenn das Gefäß in der vorgesehenen Verwendungsposition angeordnet ist. Diese Verwendungsposition kann beispielsweise durch eine Aufnahmemulde in der Basisstation bestimmt sein, in die das Gefäß mindestens teilweise (d.h. mindestens mit einem Abschnitt wie z.B. einem Gefäßfuß) einzusetzen ist. In ihr kann (bei entsprechenden Ausführungsvarianten des Gefäßes) beispielsweise mindestens ein elektrischer Kontakt einer Heizeinrichtung des Gefäßes mit einer Schaltung in der Basisstation herstellbar sein.

Die Küchenmaschine kann zudem einen Rotor umfassen, der mit mindestens einem Rotationswerkzeug zum Bearbeiten (z.B. Rühren, Schlagen und/oder Zerkleinern) von Lebensmittel verbunden ist oder werden kann. Das Gefäß kann dann eine Kupplung aufweisen, die in seiner vorgesehenen Verwendungsposition mit dem Rotor verbunden ist.

Alternativ oder zusätzlich kann die Küchenmaschine eine elektronische Steuereinrichtung, eine Waage und/oder eine elektronische Anzeigevorrichtung umfassen, die jeweils beispielsweise zumindest teilweise von der Basisstation umfasst sein können. Insbesondere kann die Küchenmaschine als (z.B. voll- oder teilautomatischer) Multifunktionsküchenautomat ausgebildet sein.

Aufgrund des mindestens einen Zwischenschalen-Griffschilds an der Zwischenschale vermindert die vorliegende Erfindung ein Verletzungsrisiko durch heißen Dampf beim Anfassen des mindestens einen Zwischenschalengriffs während eines oder nach einem Dampfgarvorgang(s). Insbesondere kann ein Verwender die Zwischenschale an ihrem mindestens einen Zwischenschalengriff von der bedampften (also von Dampf erfüllten) Dampfgarschüssel ungeschützt anheben, ohne dass er sich einer hohen Verbrennungsgefahr aussetzt: Der mindestens eine Zwischenschalengriffschild schirmt den mindestens einen Zwischenschalengriff und damit eine jeweilige ihn anfassende Hand gegen heißen Dampf ab, der infolge des Anhebens durch einen Spalt unter der Zwischenschale hindurch aufsteigt. So wird einerseits die Sicherheit erhöht, andererseits die Handhabung erleichtert, indem der Verwender auf eigene Schutzmaßnahmen wie beispielsweise die Verwendung von Kochhandschuhen oder Topflappen verzichten kann.

An der Dampfgarschüssel ist vorzugsweise mindestens ein Griff angeordnet. Derartige Griffe werden im Folgenden als "Dampfgarschüsselgriffe" bezeichnet. Daran angefasst kann die Dampfgarschüssel vorteilhaft bewegt, insbesondere umpositioniert, beispielsweise von einer ersten Unterlage abgehoben und/oder zurück auf die erste oder auf eine zweite Unterlage aufgesetzt werden; die erste oder die zweite Unterlage kann dabei insbesondere das Gefäß sein.

Der Deckel kann vorzugsweise insbesondere dazu eingerichtet/ geeignet sein, zum Dampfgaren wahlweise auf die Zwischenschale oder direkt auf den Dampfgaraufsatz (insbesondere jeweils schließend) aufgesetzt zu werden. So kann der Dampfgaraufsatz entsprechend den Wünschen eines jeweiligen Verwenders mit oder ohne Zwischenschale genutzt werden, ohne dass ein weiterer Deckel erforderlich ist.

Gemäß vorteilhaften Ausführungsformen ist am Deckel mindestens ein Griff angeordnet; derartige Griffe werden im Folgenden als "Deckelgriffe" bezeichnet. Daran angefasst kann der Deckel vorteilhaft bewegt, insbesondere umpositioniert, beispielsweise von einer ersten Unterlage abgehoben und/oder zurück auf die erste oder auf eine zweite Unterlage aufgesetzt werden; die erste oder die zweite Unterlage kann dabei insbesondere die Zwischenschale sein.

Darüber hinaus kann am Deckel vorzugsweise mindestens ein Griffschild angeordnet sein, der dazu eingerichtet ist, den mindestens einen Deckelgriff in einer Ausrichtung des Deckels, die für ihn zum Schließen der (in ihrer Dampfgarausrichtung angeordneten) Zwischenschale und/oder - in entsprechenden Ausführungsformen - der Dampfgarschüssel vorgesehen ist, nach unten hin (also von unten) abzuschirmen. Derartige Griffschilde werden im Weiteren als "Deckelgriffschilde" bezeichnet und die genannte Ausrichtung des Deckels als dessen "Schließausrichtung". Analog zum oben für den mindestens einen Zwischenschalengriffschild Dargelegten vermindern die Deckelgriffschilde ein Verletzungsrisiko durch heißen Dampf beim Anfassen des mindestens einen Deckelgriffs während eines Dampfgarvorgangs oder danach und erleichtern die Handhabung, indem der Verwender auf Schutzmaßnahmen wie beispielsweise die Verwendung von Kochhandschuhen oder Topflappen verzichten kann.

Gemäß vorteilhaften Ausführungsvarianten ist der Deckel, wenn er in mindestens einer für das Dampfgaren vorgesehenen (insbesondere vorzugsweise schließenden) Aufsetzstellung auf die Zwischenschale aufgesetzt ist, relativ zu dieser drehfest. Eine derartige Aufsetzstellung, die dann durch eine Drehstellung relativ zur Zwischenschale bestimmt ist, wird im Folgenden als eine "vorgesehene Drehstellung des Deckels bezüglich der Zwischenschale" bezeichnet. Sie kann insbesondere durch mindestens eine jeweilige Struktur an der Zwischenschale selbst und/oder am mindestens einen Zwischenschalengriff und/oder am mindestens einen Zwischenschalengriffschild bewirkt bzw. stabilisiert werden, die jeweils dazu eingerichtet sein können/kann, in der vorgesehenen Drehstellung des Deckels bezüglich der Zwischenschale mit einer jeweiligen (z.B. komplementären) Struktur am Deckel selbst und/oder (jeweils in entsprechenden Ausführungsformen) am mindestens einen Deckelgriff und/oder am mindestens einen Deckelgriffschild zusammenzuwirken, beispielsweise in diese einzugreifen oder sie aufzunehmen. Derartige Strukturen können beispielsweise mindestens eine Senke (Vertiefung) in einer jeweiligen Oberfläche, mindestens eine Ausnehmung und/oder mindestens eine Erhebung umfassen.

In Ausführungsformen, bei denen der Deckel wie oben erwähnt wahlweise auf die Zwischenschale oder direkt auf den Dampfgaraufsatz aufsetzbar ist, kann analog (alternativ oder zusätzlich) der Deckel in mindestens einer (bzw. in der mindestens einen) für das Dampfgaren vorgesehenen (insbesondere vorzugsweise schließenden) Aufsetzstellung auf die Dampfgarschüssel relativ zu dieser drehfest sein. Eine derartige Aufsetzstellung, die dann durch eine Drehstellung relativ zur Dampfgarschüssel bestimmt ist, wird im Folgenden als eine "vorgesehene Drehstellung des Deckels bezüglich der Dampfgarschüssel" bezeichnet. Sie kann analog zum Obigen durch jeweilige Strukturen an der Dampfgarschüssel und/oder am Deckel bzw. (jeweils in entsprechenden Ausführungsformen) am mindestens einen Deckelgriff, am mindestens einen Deckelgriffschild und/oder am mindestens einen Dampfgarschüsselgriff bewirkt bzw. stabilisiert werden.

Analog kann (alternativ oder zusätzlich) die Zwischenschale in mindestens einer für das Dampfgaren vorgesehenen Stellung drehfest relativ zur Dampfgarschüssel anzuordnen sein. Diese Stellung wird im Folgenden als "vorgesehene Drehstellung der Zwischenschale bezüglich der Dampfgarschüssel" bezeichnet.

Im Falle, dass der Deckel dazu eingerichtet ist, sowohl in mindestens einer vorgesehenen Drehstellung bezüglich der Zwischenschale drehfest relativ zur Zwischenschale als auch in mindestens einer vorgesehenen Drehstellung des Deckels bezüglich der Dampfgarschüssel drehfest zur Dampfgarschüssel angeordnet zu werden, kann die jeweilige Drehfestigkeit vorzugsweise mittels derselben Struktur(en) am Deckel bzw. (in entsprechenden Ausführungsformen) am mindestens einen Deckelgriff und/oder am mindestens einen Deckelgriffschild bewirkt bzw. stabilisiert werden. Mindestens eine entsprechende, die Drehfestigkeit wie beschrieben gewährleistende Struktur ist dann also vorzugsweise sowohl dazu eingerichtet, (in der vorgesehenen mindestens einen Drehstellung bezüglich der Zwischenschale) mit einer jeweiligen Struktur an der Zwischenschale bzw. am mindestens einen Zwischenschalengriff und/oder am mindestens einen Zwischenschalengriffschild zusammenzuwirken, als auch dazu, (in der vorgesehenen Drehstellung des Deckels bezüglich der Dampfgarschüssel) mit einer jeweiligen Struktur an der Dampfgarschüssel bzw. (in entsprechenden Ausführungsvarianten) an mindestens einem Dampfgarschüsselgriff zusammenzuwirken. Diese letztgenannten Strukturen können dabei in entsprechenden Ausführungsformen vorzugsweise überdies jeweils dazu eingerichtet sein, bei entsprechend in die Dampfgarschüssel eingesetzter Zwischenschale mit einer weiteren Struktur an der Zwischenschale so zusammenzuwirken und so deren Drehfestigkeit relativ zur Dampfgarschüssel zu bewirken bzw. zu stabilisieren.

Derartige Mehrfachfunktionen der Struktur(en) vereinfachen den Aufbau und die Herstellung des Dampfgaraufsatzes.

Gemäß vorteilhaften Ausführungsformen, bei denen der Deckel wie erwähnt mindestens einen Deckelgriff und mindestens einen Deckelgriffschild aufweist, kann der Deckel so in einer für das Dampfgaren vorgesehenen Schließausrichtung, insbesondere in mindestens einer vorgesehenen Aufsetzstellung (in entsprechenden Ausführungsformen beispielsweise in der mindestens einen vorgesehenen Drehstellung des Deckels bezüglich der Zwischenschale) auf die Zwischenschale (in ihrer Dampfgarausrichtung) aufsetzbar sein, dass der mindestens eine Deckelgriffschild in mindestens einem Bereich auf dem Zwischenschalengriffschild aufliegt; dabei kann der mindestens eine Deckelgriffschild über einen jeweiligen Zwischenschalengriff hinweggreifen.

Derartige Ausführungen ermöglichen vorteilhaft eine besonders kompakte und damit raumsparende Anordnung von Deckel und Zwischenschale übereinander, zudem werden mögliche Verschmutzungsflächen vermieden oder zumindest verkleinert.

Insbesondere bevorzugt sind dabei Varianten, bei denen der mindestens eine Zwischenschalengriff in einem Zustand, in dem der Deckel mit auf dem mindestens einen Zwischenschalengriffschild aufliegendem Deckelgriffschild auf die in der vorgesehenen Dampfgarausrichtung ausgerichtete Zwischenschale aufgesetzt ist, von unten greifbar ist. Zumindest ein Bereich des Zwischenschalengriffs liegt in einem derartigen Zustand also von unten frei; insbesondere verhindert der Deckelgriffschild somit nicht, dass der Zwischenschalengriff in einem solchen Bereich (der vorzugsweise mindestens teilweise von einem äußeren Rand des Zwischenschalengriffs begrenzt wird) zugänglich ist. Gemäß vorteilhaften Ausführungsformen ragt der genannte Bereich des Zwischenschalengriffs in dem angegebenen Zustand unter dem Deckel bzw. dem mindestens einen Deckelgriff hervor. Insbesondere kann dann mindestens ein Abschnitt eines äußeren Randes des Deckelgriffes in dem genannten Zustand auf dem Zwischenschalengriff aufliegend angeordnet sein.

Diese Ausführungsformen ermöglichen ein besonders vorteilhaftes simultanes Anheben sowohl der Zwischenschale als auch des darauf aufliegenden Deckels am mindestens einen Zwischenschalengriff bei zugleich erhöhter Sicherheit trotz Verzicht auf Schutzmaßnahmen wie Kochhandschuhen oder Topflappen.

Der mindestens eine Zwischenschalengriff und/oder der mindestens eine Zwischenschalengriffschild können jeweils als ein Kragen ausgebildet sein, der die Zwischenschale (bzw. deren Aufnahmeraum für zu garendes Lebensmittel) vollständig oder zumindest teilweise umläuft, im Falle einer runden Zwischenschale vorzugsweise koaxial.

Gemäß bevorzugten Ausführungsvarianten sind an der Zwischenschale (insbesondere) zwei Zwischenschalengriffe angeordnet, die diametral zueinander von der Zwischenschale nach außen abstehen, im Falle einer runden Zwischenschale vorzugsweise insbesondere in (bezogen auf die Zwischenschale) radialer Richtung (also mit einer von Null verschiedenen radialen Richtungskomponente). Dies erlaubt ein bequemes Greifen mit beiden Händen und kann eine bevorzugte Stellung der Zwischenschale relativ zur Dampfgarschüssel und/oder zum Deckel definieren, insbesondere (in entsprechenden Ausführungsformen) die vorgesehene Drehstellung des Deckels bezüglich der Zwischenschale.

Analog können/kann (in entsprechenden Ausführungsformen) der mindestens eine Deckelgriff und/oder der mindestens eine Deckelgriffschild jeweils als ein Kragen ausgebildet sein, der den Deckel vollständig oder zumindest teilweise umläuft, im Falle eines runden Deckels vorzugsweise koaxial.

Gemäß bevorzugten Ausführungsvarianten sind am Deckel (insbesondere) zwei Deckelgriffe angeordnet, die diametral zueinander vom Deckel nach außen abstehen, im Falle eines runden Deckels vorzugsweise insbesondere in (bezogen auf den Deckel) radialer Richtung. Dies erlaubt ein bequemes Greifen mit beiden Händen und kann insbesondere (jeweils in entsprechenden Ausführungsformen) einer Kennzeichnung der mindestens einen vorgesehenen Drehstellung des Deckels bezüglich der Zwischenschale und/oder der mindestens einen vorgesehenen Drehstellung des Deckels bezüglich der Dampfgarschüssel dienen.

In bevorzugten Ausführungsformen ist der Deckel dazu eingerichtet, als Untersetzer für die Zwischenschale verwendet zu werden, vorzugsweise in einer im Vergleich zur Schließausrichtung umgedrehten Stellung, in der er dann also auf einer Deckelfläche aufliegt, die in der Schließausrichtung einer Außenumgebung zugewandt ist (nach oben weist). Insbesondere ist der Deckel bei derartigen Ausführungsformen vorzugsweise dazu eingerichtet, in dieser umgedrehten Stellung stabil auf einer ebenen Unterlage aufzuliegen. Vorzugsweise ist der Deckel in der umgedrehten Stellung als (dichte) Schale ausgebildet, weist also insbesondere einen gegenüber einer Grundfläche erhabenen Rand auf. So dient er als Auffangschale für abfließende und/oder abtropfende Flüssigkeit, insbesondere kondensierten Dampf.

Bei Ausführungsformen, bei denen zudem der Deckel wie erwähnt mindestens einen Deckelgriffschild umfasst, kann dieser vorzugsweise dazu eingerichtet sein, bei einer Verwendung des Deckels als Untersetzer den mindestens einen Zwischenschalengriffschild abzustützen. Die Zwischenschale kann dabei vorzugsweise so auf den umgedrehten Deckel aufgesetzt werden, dass der mindestens eine Zwischenschalengriffschild auf dem mindestens einen Deckelgriffschild aufliegt. An dem mindestens einen Deckelgriffschild kann ein stabilisierender Rand ausgebildet sein, der dabei (also bei einem solchen Aufliegen) um den mindestens einen Zwischenschalengriffschild mindestens teilweise herumgreift.

In einem Zustand, in dem die Zwischenschale bei derartigen Ausführungsformen auf den umgedrehten, als Untersetzer verwendeten Deckel aufgesetzt ist, ist ein Boden der Zwischenschale vorzugsweise vom Deckel, insbesondere von einer dann dem Boden der Zwischenschale zugewandten Deckelfläche beabstandet (beispielsweise um mindestens 5mm oder mindestens 1cm). So kann Flüssigkeit (insbesondere kondensierter Dampf) aus oder von der Zwischenschale auf die Deckelfläche abtropfen.

Gemäß vorteilhaften Ausführungsformen ist der Deckel (alternativ oder zusätzlich) dazu eingerichtet, als Untersetzer für die Dampfgarschüssel zu dienen, vorzugsweise in einer umgedreht im Vergleich zu einer für das Dampfgaren vorgesehenen Stellung. Analog zum Obigen liegt dabei der Deckel in der umgedrehten Stellung stabil auf einer ebenen Unterlage auf. Auch bei diesen Ausführungsvarianten ist der Deckel in der umgedrehten Stellung vorzugsweise als (dichte) Schale mit einem gegenüber einer Grundfläche erhabenen Rand ausgebildet, so dass er als Auffangschale für abfließende und/oder abtropfende Flüssigkeit, insbesondere kondensierten Dampf dient. Derart als Untersetzer verwendet nimmt der Deckel vorzugsweise eine Grundfläche der Dampfgarschüssel auf, insbesondere kann dann die Dampfgarschüssel in eine solche vom umgedrehten Deckel ausgebildete Auffangschale hineinstellbar sein. Damit verhindert der Deckel in dieser Stellung, dass Feuchtigkeit aus der Dampfgarschüssel auf eine Unterlage (z.B. eine Arbeitsplatte oder einen Tisch) läuft.

Im Folgenden werden bevorzugte Ausführungsbeispiele der Erfindung anhand von Zeichnungen näher erläutert. Es versteht sich, dass die einzelnen Komponenten auch anders kombiniert und/oder geformt sein können als dargestellt. Bezugszeichen für einander entsprechende Elemente sind figurenübergreifend verwendet und werden ggf. nicht für jede Figur neu beschrieben.

Es versteht sich, dass reale Größenverhältnisse von den dargestellten abweichen können.

Es zeigen schematisch:
- Figur 1:: eine Gefäß-Dampfgaraufsatz-Kombination gemäß einer exemplarischen Ausführungsform der vorliegenden Erfindung;
- Figur 2:: eine exemplarische Ausführungsform eines erfindungsgemäßen Dampfgaraufsatzes;
- Figur 3:: Deckel und Dampfgaraufsatz des in Figur 2 dargestellten Dampfgaraufsatzes in direkt aufeinandergesetztem Zustand;
- Figur 4:: eine Verwendung eines Deckels eines erfindungsgemäßen Dampfgaraufsatzes als Untersetzer für eine Zwischenschale; und
- Figur 5:: eine Verwendung eines Deckels eines erfindungsgemäßen Dampfgaraufsatzes als Untersetzer für eine Dampfgarschüssel.

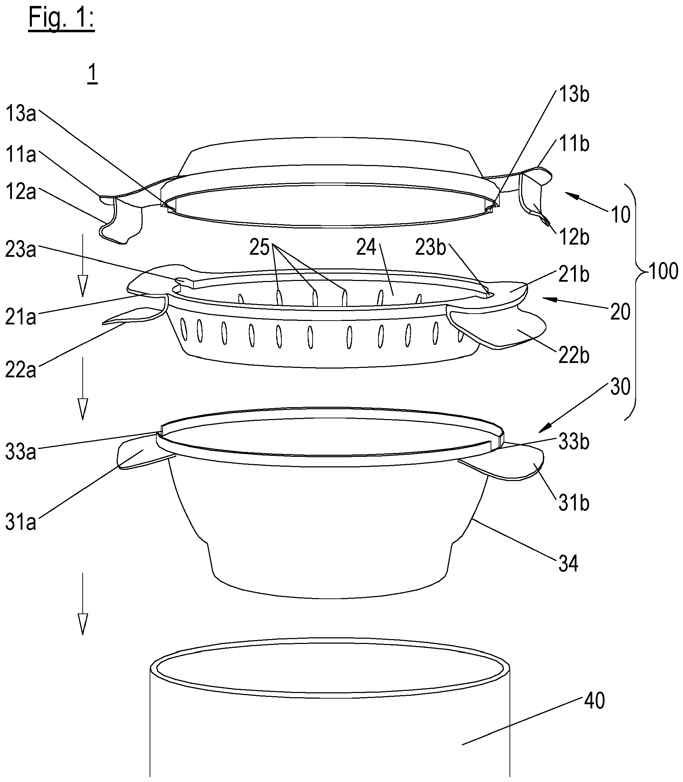

Die Figur 1 zeigt ein Ausführungsbeispiel einer erfindungsgemäßen Gefäß-Dampfgaraufsatz-Kombination 1 in einer für das Dampfgaren vorgesehenen Ausrichtung.

Die Gefäß-Dampfgaraufsatz-Kombination 1 umfasst einen exemplarischen erfindungsgemäßen Dampfgaraufsatz 100 und ein Gefäß 40, von dem nur ein Bereich gezeigt ist, auf den der Dampfgaraufsatz 100 bei einer Verwendung aufzusetzen ist.

Der Dampfgaraufsatz 100 umfasst eine auf das Gefäß 40 aufzusetzende Dampfgarschüssel 30, eine Zwischenschale 20 und einen Deckel 10, die in dieser Reihenfolge (in der angegebenen Pfeilrichtung) aufeinander zu stapeln sind.

An einer Peripherie der Zwischenschale 20 sind im vorliegenden Ausführungsbeispiel diametral zueinander genau zwei Zwischenschalengriffe 21a, 21b angeordnet, an denen angefasst die Zwischenschale vorteilhaft umpositioniert, insbesondere von der Dampfgarschüssel 30 abgehoben werden kann.

In der gezeigten vorgesehenen Dampfgarausrichtung ist unterhalb jedes der Zwischenschalengriffe 21a, 21b jeweils ein Zwischenschalengriffschild 22a, 22b angeordnet, der dazu eingerichtet ist, den jeweiligen der Zwischenschalengriff 21a, 21b nach unten hin gegen Dampf abzuschirmen. Bei einer Verwendung des Dampfgaraufsatzes und einem Anheben der Zwischenschale 20 von der Dampfgarschüssel 30 lenken die Zwischenschalengriffschilde 22a, 22b somit austretenden Dampf ab und vermindern so das Risiko, dass der Dampf auf eine zum Anheben am jeweiligen Zwischenschalengriff 21a, 21b befindliche Hand eines Verwenders trifft. So reduzieren die Zwischenschalengriffschilde 22a, 22b ein Verletzungsrisiko, selbst wenn der Verwender keine Schutzvorkehrung (z.B. in Form einer Verwendung eines Handschuhs oder Topflappens) getroffen hat.

Im vorliegenden Ausführungsbeispiel sind an einer Peripherie des Deckel 10 diametral zueinander genau zwei Deckelgriffe 11a, 11b angeordnet, an denen der Deckel zum Umpositionieren, insbesondere An- oder Abheben vorteilhaft angefasst werden kann. Ebenfalls diametral zueinander angeordnete Deckelgriffschilde 12a, 12b sind dazu eingerichtet, in der dargestellten Schließausrichtung des Deckels einen jeweiligen der Deckelgriffe 11a, 11b nach unten hin gegen Dampf abzuschirmen. Hebt ein Verwender den Deckel beim Dampfgaren an einem oder beiden Deckelgriff/en 11a, 11b an, lenkt ein jeweiliger Deckelgriffschild 12a, 12b somit analog zum Obigen austretenden Dampf ab und vermindert so das Verletzungsrisiko.

Zum erleichterten Umpositionieren der Dampfgarschüssel 30 sind an deren Peripherie diametral zueinander Dampfgarschüsselgriffe 31a, 31b angeordnet.

Im dargestellten Ausführungsbeispiel weisen der Deckel 10, die Zwischenschale 20 und die Dampfgarschüssel 30 jeweilige Strukturen 13a, 13b, 23a, 23b, 33a, 33b auf, die dazu eingerichtet sind, ineinander einzugreifen, nämlich vorliegend die Strukturen 13a, 13b des Deckels 10 mit ihren nach außen hervortretenden Spitzen in jeweilige Innenbereiche der Strukturen 23a, 23b und jeweilige (in der Figur 1 nicht sichtbare) Außenseiten der Strukturen 23a, 23b in die Strukturen 33a, 33b. Damit bestimmen die Strukturen 13a, 13b, 23a, 23b, 33a, 33b zum einen eine erste vorgesehene Drehstellung des Deckels relativ zur Zwischenschale und zum anderen eine erste vorgesehene Drehstellung der Zwischenschale relativ zur Dampfgarschüssel. Darüber hinaus bewirken bzw. stabilisieren die Strukturen 13a, 13b, 23a, 23b, 33a, 33b eine jeweilige Drehfestigkeit in dieser vorgesehenen Drehstellung.

Der Deckel kann vorliegend auch direkt auf die Dampfgarschüssel aufgesetzt werden (nicht gezeigt; in diesem Fall greifen die Strukturen 13a, 13b jeweils in einer der Strukturen 33a, 33b ein.

Die jeweiligen Strukturen 13a, 13b am Deckel 10, die Strukturen 23a, 23b an der Zwischenschale 20 und die Strukturen 33a, 33b an der Dampfgarschüssel 30 sind im gezeigten Ausführungsbeispiel vorteilhaft jeweils drehsymmetrisch zueinander ausgebildet, vorliegend um 180°. Auch bei einer Drehung des Deckels 10 und/oder der Zwischenschale 20 um 180° (in der dargestellten, für das Schließen bzw. Dampfgaren vorgesehenen Ausrichtung jeweils um eine vertikale Drehachse) greifen die Strukturen somit wie erwähnt ineinander ein, so dass damit alternative vorgesehene Drehstellungen bestimmt sind.

Alternativ oder zusätzlich zu den Strukturen 13a, 13b, 23a, 23b, 33a, 33b können die Deckelgriffe 11a, 11b, die Deckelgriffschilde 12a, 12b, die Zwischenschalengriffe 21a, 21b, die Zwischenschalengriffschilde 22a, 22b und/oder die Dampfgarschüsselgriffe 31a, 31b (jeweils sofern vorhanden) eines erfindungsgemäßen Dampfgaraufsatzes eine oder mehrere Strukturen (z.B. Erhebungen und/oder Senken) aufweisen (nicht dargestellt), die jeweils dazu eingerichtet sind, mit passenden anderen Strukturen zusammenzuwirken und so eine Drehfestigkeit des Deckels relativ zur Zwischenschale und/oder zur Dampfgarschüssel bzw. der Zwischenschale relativ zur Dampfgarschüssel zu bewirken bzw. zu stabilisieren.

Wird der Deckel 10 in einer solchen vorgesehenen Drehstellung relativ zur Zwischenschale 20 auf diese aufgesetzt, liegen beim gezeigten Ausführungsbeispiel die Deckelgriffschilde 12a, 12b auf einem jeweiligen der Zwischenschalengriffschilde 22a, 22b auf. Diese wiederum liegen bei der gezeigten Ausführungsform jeweils auf einem der Dampfgarschüsselgriffe 11a, 11b auf, wenn die Zwischenschale in der vorgesehenen Drehstellung relativ zur Dampfgarschüssel 30 aufgesetzt ist. Darüber hinaus liegen in dieser Stellung bei der gezeigten Ausführungsform die Deckelgriffe 11a, 11b bereichsweise auf einem jeweiligen der Zwischenschalengriffe 21a, 21b auf.

Der Dampfgaraufsatz 100 ist somit in seiner Verwendung besonders kompakt und raumsparend, zudem erleichtern die übereinander anzuordnenden Griffschilde bzw. Griffe das Stapeln in den vorgesehenen Drehstellungen, in denen eine vorteilhafte Drehfestigkeit vorliegt.

Bei einer Verwendung der Gefäß-Dampfgaraufsatz-Kombination 1 wird in dem Gefäß 40 Flüssigkeit, insbesondere Wasser erhitzt und so Dampf erzeugt, der durch mindestens eine in der Figur 1 nicht sichtbare Öffnung in der Dampfgarschüssel 30 in diese eindringen und so zum Erhitzen oder sogar Garen eines darin enthaltenen (nicht dargestellten) Lebensmittels genutzt werden kann.

Die Zwischenschale 20 weist vorliegend eine Schalenwand 24 mit einer Mehrzahl an Löchern 25 auf; in einem auf die Dampfgarschüssel aufgesetzten Zustand ist die Schalenwand 24 der Zwischenschale 20 dabei vorzugsweise von einer Schüsselwand 34 der Dampfgarschüssel 30 beabstandet, so dass Dampf durch einen Zwischenraum zwischen der Schüsselwand 34 und der Schalenwand 24 zu den Löchern 25 vor- und durch diese hindurch in die Zwischenschale eindringen kann. Zusätzlich kann im (in der Figur nicht sichtbaren) Boden der Zwischenschale mindestens eine Öffnung, insbesondere mindestens ein Loch ausgebildet sein. Insbesondere kann der Boden siebartig durchlöchert ausgebildet sein.

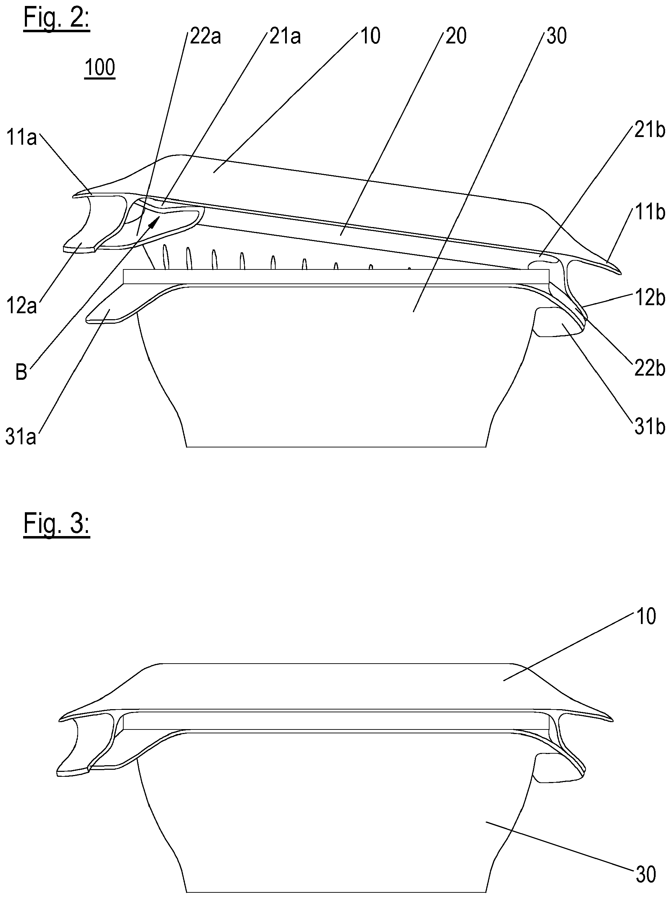

In der Figur 2 ist die Dampfgarschüssel 30 in einer für das Dampfgaren vorgesehenen Ausrichtung gezeigt. Der Deckel 10 is schließend in einer vorgesehenen Aufsetzstellung auf die Zwischenschale aufgesetzt; in dieser Stellung liegen beim gezeigten Ausführungsbeispiel die Deckelgriffschilde 12a, 12b jeweils auf einem Zwischenschalengriffschild 22a, 22b auf und die Deckelgriffe 11a, 11b jeweils auf einem Bereich der Zwischenschalengriffe 22a, 22b.

Dabei ragt ein Bereich B des Zwischenschalengriffs 21a unter dem Deckelgriff 11a hervor und ist so von unten greifbar; in der Figur 2 ist die Zwischenschale auf dieser Seite mitsamt dem Deckel 1 angehoben, wobei vorzugsweise der Bereich B angefasst wird. Ein analoger Überstand eines Bereichs des Zwischenschalengriffs 21b über den Deckelgriff 11b ist aufgrund der Perspektive in der Figur 2 nicht sichtbar.

Insbesondere stehen somit die vorteilhaften Deckelgriffschilde 12a, 12b auch bei aufgesetztem Deckel der Greifbarkeit der Zwischenschalengriffe 21a, 21b bei diesem Ausführungsbeispiel nicht entgegen.

Bei der in den Figuren 2 und 3 dargestellten Ausführungsform eines erfindungsgemäßen Dampfgaraufsatzes 100 ist der Deckel 10 dazu geeignet, wahlweise auf die Zwischenschale 20 oder direkt auf die Dampfgarschüssel 30 aufgesetzt zu werden; Letzteres ist in der Figur 3 gezeigt.

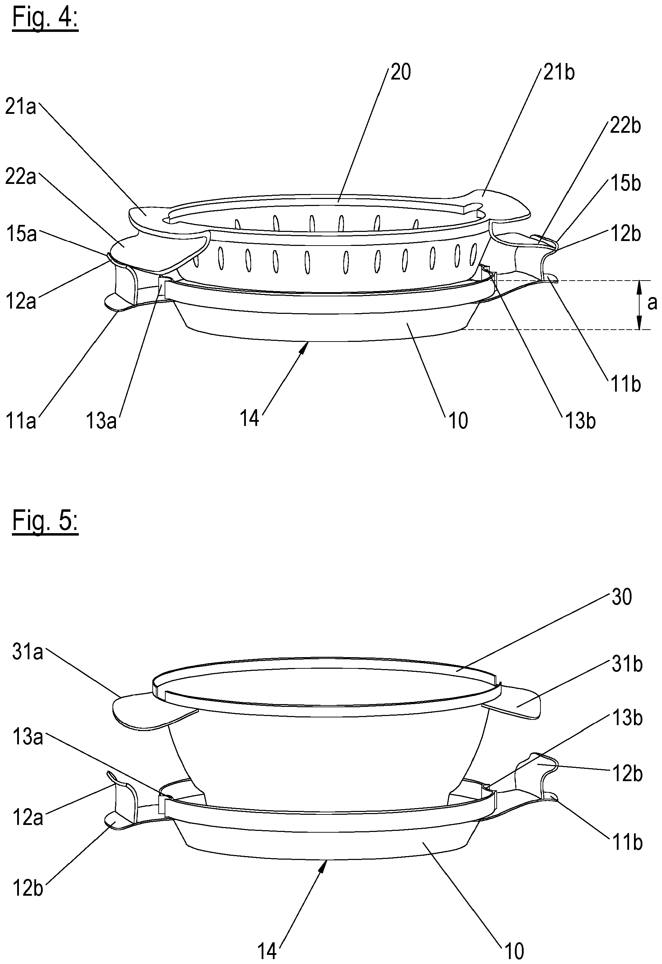

Die Figuren 4 und 5 zeigen jeweils eine Verwendung des Deckels 10 als Untersetzer, nämlich für die Zwischenschale 20 in Figur 4 und für die Dampfgarschüssel 30 in Figur 5.

Der Deckel 10 ist dabei jeweils im Vergleich zu einer vorgesehenen Schließausrichtung umgedreht, also um eine horizontale Achse um 180° gedreht. Er weist einen relativ zu seiner sich entlang einer Ebene erstreckenden Deckelfläche 14 erhabenen Rand auf, aufgrund dessen er als Auffangschale für herabgeflossene oder abgetropfte Flüssigkeit dient.

Wie in der Figur 4 erkennbar ist, kann die Zwischenschale 20 so (in ihrer für das Dampfgaren vorgesehenen Dampfgarausrichtung) auf dem umgedrehten Deckel 10 positioniert werden, dass die Deckelgriffschilde 12a, 12b einen jeweiligen der Zwischenschalengriffschilde 22a, 22b abstützen. Ein jeweiliger stabilisierender Rand 15a, 15b an den Deckelgriffschilden 12a, 12b greift dabei teilweise um die der Zwischenschalengriffschilde 22a, 22b herum.

Derart auf den umgedrehten Deckel 10 aufgesetzt hat bei dem dargestellten Ausführungsbeispiel ein Boden der Zwischenschale 20 vorzugsweise einen Abstand a>0 oder a ≥ 5mm oder sogar a ≥ 1cm von einer ihm zugewandten Deckelfläche des Deckels 10. So kann Feuchtigkeit, insbesondere Kondensat in den als Auffangschale dienenden Deckel 10 abtropfen.

Die Deckelfläche 14 des Deckels 10 ist vorliegend geeignet (insbesondere groß genug), eine Grundfläche der Dampfgarschüssel 30 aufzunehmen, so dass diese, wie in der Figur 5 dargestellt, in den als Auffangschale dienenden Deckel 10 hineingestellt werden kann.

Ein erfindungsgemäßer Dampfgaraufsatz 100 umfasst eine Dampfgarschüssel 10 zum Aufsetzen auf ein Gefäß 40, eine Zwischenschale 20 zum Aufsetzen auf die Dampfgarschüssel 10 und einen Deckel 30, der auf die Zwischenschale 20 aufzusetzen ist. An der Zwischenschale 20 ist mindestens ein Zwischenschalengriff 21a, 21b angeordnet sowie mindestens ein Zwischenschalengriffschild 22a, 22b, der dazu eingerichtet ist, den mindestens einen Zwischenschalengriff 21a, 21b in einer für ein Dampfgaren vorgesehenen Dampfgarausrichtung der Zwischenschale 20 nach unten hin abzuschirmen.

Eine erfindungsgemäße Gefäß-Dampfgaraufsatz-Kombination 1 umfasst einen derartigen Dampfgaraufsatz 100 und ein Gefäß 40, auf das jener aufzusetzen ist.

Offenbart ist ferner Küchenmaschine mit einer Basisstation und einer erfindungsgemäßen Gefäß-Dampfgaraufsatz-Kombination 1.

### Bezugszeichen

- 1: Gefäß-Dampfgaraufsatz-Kombination

- 10: Deckel
- 11a, 11b: Deckelgriff
- 12a, 12b: Deckelgriffschild
- 13a, 13b: Struktur am Deckel
- 14: Deckelfläche
- 15a, 15b: stabilisierender Rand

- 20: Zwischenschale
- 21a, 21b: Zwischenschalengriff
- 22a, 22b: Zwischenschalengriffschild
- 23a, 23b: Struktur an der Zwischenschale
- 24: Schalenwand
- 25: Loch in der Schalenwand

- 30: Dampfgarschüssel
- 31a, 31b: Dampfgarschüsselgriff
- 33a, 33b: Struktur an der Dampfgarschüssel
- 34: Schüsselwand

- 40: Gefäß

- 100: Dampfgaraufsatz

## Patentansprüche

1. Dampfgaraufsatz (100), der eine Dampfgarschüssel (30) zum Aufsetzen auf ein Gefäß (40), eine Zwischenschale (20) zum Aufsetzen auf die Dampfgarschüssel (30) und einen Deckel (10) umfasst, der auf die Zwischenschale (20) aufzusetzen ist, wobei an der Zwischenschale (20) mindestens ein Zwischenschalengriff (21a, 21b) angeordnet ist,
**gekennzeichnet durch**
mindestens einen Zwischenschalengriffschild (22a, 22b), der dazu eingerichtet ist, den mindestens einen Zwischenschalengriff (21a, 21b) in einer für ein Dampfgaren vorgesehenen Dampfgarausrichtung der Zwischenschale (20) nach unten hin abzuschirmen.

2. Dampfgaraufsatz gemäß Anspruch 1, wobei am Deckel (20) mindestens ein Deckelgriff (11a, 11b) angeordnet ist sowie mindestens ein Deckelgriffschild (12a, 12b), der dazu eingerichtet ist, in einer Schließausrichtung des Deckels (10) den mindestens einen Deckelgriff (11a, 11b) nach unten hin abzuschirmen.

3. Dampfgaraufsatz gemäß Anspruch 2, wobei der mindestens eine Deckelgriffschild (12a, 12b) dazu eingerichtet ist, in mindestens einer vorgesehenen Aufsetzstellung des Deckels (10) auf der Zwischenschale (20) mindestens bereichsweise auf einem jeweiligen Zwischenschalengriffschild (22a, 22b) aufzuliegen.

4. Dampfgaraufsatz gemäß Anspruch 3, wobei der mindestens eine Zwischenschalengriff (21a, 21b) in einem Zustand, in dem die Zwischenschale (20) in der Dampfgarausrichtung und der Deckel (10) mit mindestens einem auf dem mindestens einen Zwischenschalengriffschild (22a, 22b) zumindest bereichsweise aufliegendem Deckelgriffschild (12a, 12b) auf die Zwischenschale (20) aufgesetzt ist, zumindest in einem Bereich (B) von unten greifbar ist.

5. Dampfgaraufsatz gemäß einem der Ansprüche 2 bis 4, wobei der Deckel (10) dazu eingerichtet ist, als Untersetzer für die Zwischenschale (20) verwendet zu werden und dabei mit dem mindestens einen Deckelgriffschild (12a, 12b) den mindestens einen Zwischenschalengriffschild (22a, 22b) abzustützen.

6. Dampfgaraufsatz gemäß einem der vorhergehenden Ansprüche, wobei der Deckel (10) in einem auf die Zwischenschale (20) aufgesetzten Zustand in mindestens einer vorgesehenen Drehstellung bezüglich der Zwischenschale relativ zur dieser drehfest ist.

7. Dampfgaraufsatz gemäß einem der vorhergehenden Ansprüche, wobei die Zwischenschale (20) in einem auf die Dampfgarschüssel (30) aufgesetzten Zustand in mindesten einer vorgesehenen Drehstellung bezüglich der Dampfgarschüssel relativ zu dieser drehfest ist.

8. Dampfgaraufsatz gemäß einem der vorhergehenden Ansprüche, wobei der Deckel (10) zum Dampfgaren wahlweise auf die Zwischenschale (20) oder direkt auf die Dampfgarschüssel (30) aufzusetzen ist.

9. Gefäß-Dampfgaraufsatz-Kombination (1), die ein Gefäß (40) und einen darauf aufzusetzenden Dampfgaraufsatz (100) gemäß einem der vorhergehenden Ansprüche umfasst.

10. Küchenmaschine mit Heizfunktion, wobei die Küchenmaschine eine Basisstation und eine Gefäß-Dampfgaraufsatz-Kombination (1) gemäß Anspruch 9 umfasst, deren Gefäß (40) herausnehmbar in einer vorgesehenen Verwendungsposition der Basisstation zu positionieren ist.

## Claims

1. Steam cooking attachment (100), which comprises a steam cooking bowl (30) for attachment to a vessel (40), an intermediate basket (20) for attachment to the steam cooking bowl (30) and a lid (10), which is to be attached to the intermediate basket (20), wherein at least one intermediate basket handle (21a, 21b) is arranged on the intermediate basket (20),
**characterised by**
at least one intermediate basket handle shield (22a, 22b), which is configured to shield the at least one intermediate basket handle (21a, 21b) towards the bottom in a steam cooking orientation of the intermediate basket (20) provided for steam cooking.

2. Steam cooking attachment according to claim 1, wherein at least one lid handle (11a, 11b) is arranged on the lid (20) and at least one lid handle shield (12a, 12b), which is configured to shield the at least one lid handle (11a, 11b) towards the bottom in a closing orientation of the lid (10).

3. Steam cooking attachment according to claim 2, wherein the at least one lid handle shield (12a, 12b) is configured to lie, at least in regions, against a respective intermediate basket handle shield (22a, 22b), in at least one provided attachment position of the lid (10) on the intermediate basket (20).

4. Steam cooking attachment according to claim 3, wherein the at least one intermediate basket handle (21a, 21b), in a state in which the intermediate basket (20) is attached in the steam cooking orientation and the lid (10) is attached to the intermediate basket (20) with at least one lid handle shield (12a, 12b) lying, at least in regions, against the at least one intermediate basket handle shield (22a, 22b), can be grasped from below, at least in one region (B).

5. Steam cooking attachment according to one of claims 2 to 4, wherein the lid (10) is configured to be used as a placement base for the intermediate basket (20) and in doing so to support the at least one intermediate basket handle shield (22a, 22b) using the at least one lid handle shield (12a, 12b).

6. Steam cooking attachment according to one of the preceding claims, wherein the lid (10), in a state in which it is attached to the intermediate basket (20), in at least one provided rotational position in relation to the intermediate basket, is rotationally fixed relative thereto.

7. Steam cooking attachment according to one of the preceding claims, wherein the intermediate basket (20), in a state in which it is attached to the steam cooking bowl (30), in at least one provided rotational position in relation to the steam cooking bowl, is rotationally fixed relative thereto.

8. Steam cooking attachment according to one of the preceding claims, wherein the lid (10) is optionally to be attached to the intermediate basket (20) or directly to the steam cooking bowl (30) for the purpose of steam cooking.

9. Vessel-steam cooking attachment combination (1), which comprises a vessel (40) and a steam cooking attachment (100) according to one of the preceding claims to be attached thereto.

10. Food processor with heating function, wherein the food processor comprises a base station and a vessel-steam cooking attachment combination (1) according to claim 9, the vessel (40) of which is to be positioned such that it can be removed in a provided use position of the base station.

## Revendications

1. Insert de cuisson à la vapeur (100) qui comprend un plat de cuisson à la vapeur (30) à poser sur un récipient (40), un panier intermédiaire (20) à poser sur le plat de cuisson à la vapeur (30) et un couvercle (10) à poser sur le panier intermédiaire (20), dans lequel au moins une poignée de panier intermédiaire (21a, 21b) est disposée sur le panier intermédiaire (20), **caractérisé par** au moins un bouclier de poignée de panier intermédiaire (22a, 22b) aménagé afin de protéger l'au moins une poignée de panier intermédiaire (21a, 21b) vers le bas dans une orientation de cuisson à la vapeur du panier intermédiaire (20) prévue pour une cuisson à la vapeur.

2. Insert de cuisson à la vapeur selon la revendication 1, dans lequel au moins une poignée de couvercle (11a, 11b) est disposée sur le couvercle (20) ainsi qu'au moins un bouclier de poignée de couvercle -(12a, 12b), aménagé afin de protéger l'au moins une poignée de couvercle (11a, 11b) vers le bas dans une orientation de fermeture du couvercle (10).

3. Insert de cuisson à la vapeur selon la revendication 2, dans lequel l'au moins un bouclier de poignée de couvercle (12a, 12b) est aménagé afin de reposer, dans au moins une position posée prévue du couvercle (10) sur le panier intermédiaire (20), au moins par sections sur un bouclier de poignée de panier intermédiaire correspondant (22a, 22b).

4. Insert de cuisson à la vapeur selon la revendication 3, dans lequel l'au moins une poignée de panier intermédiaire (21a, 21b) est, dans un état dans lequel le panier intermédiaire (20) se trouve dans l'orientation de cuisson à la vapeur et le couvercle (10) se trouve posé sur le panier intermédiaire (20) avec au moins un bouclier de poignée de couvercle (12a, 12b) posé au moins par sections sur l'au moins un bouclier de poignée de panier intermédiaire (22a, 22b), saisissable au moins dans une zone (B) par le bas.

5. Insert de cuisson à la vapeur selon l'une des revendications 2 à 4, dans lequel le couvercle (10) est aménagé afin d'être utilisé comme soucoupe pour le panier intermédiaire (20) et de soutenir ce faisant, avec l'au moins un bouclier de poignée de couvercle (12a, 12b), l'au moins un bouclier de poignée de panier intermédiaire (22a, 22b).

6. Insert de cuisson à la vapeur selon l'une des revendications précédentes, dans lequel le couvercle (10) est, dans un état posé sur le panier intermédiaire (20), dans au moins une position de rotation prévue par rapport au panier intermédiaire, immobile en rotation par rapport à celui-ci.

7. Insert de cuisson à la vapeur selon l'une des revendications précédentes, dans lequel le panier intermédiaire (20) est, dans un état posé sur plat de cuisson à la vapeur (30), dans au moins une position de rotation prévue par rapport au plat de cuisson à la vapeur, immobile en rotation par rapport à celui-ci.

8. Insert de cuisson à la vapeur selon l'une des revendications précédentes, dans lequel le couvercle (10) est à poser au choix sur le panier intermédiaire (20) ou directement sur le plat de cuisson à la vapeur (30) pour la cuisson à la vapeur.

9. Combinaison récipient-insert de cuisson à la vapeur (1) comprenant un récipient (40) et un insert de cuisson à la vapeur (100) à poser sur celui-ci, selon l'une des revendications précédentes.

10. Robot de cuisine avec fonction chauffante, dans lequel le robot de cuisine comprend une station de base et une combinaison récipient-insert de cuisson à la vapeur (1) selon la revendication 9, dont le récipient (40) est à positionner de façon amovible dans une position d'utilisation prévue de la station de base.
